# EUROPÄISCHE PATENTSCHRIFT

(11) **EP 3 068 573 B1**
(45) Veröffentlichungstag und Bekanntmachung des Hinweises auf die Patenterteilung: **13.02.2019**
(21) Anmeldenummer: 14796418.3
(22) Anmeldetag: 05.11.2014
(51) Int. Cl.: B23K 11/00, B23K 11/11, B23K 11/16, B23K 11/34

(54) **MEHRSTUFIGES WIDERSTANDSSCHWEISSEN VON SANDWICHBLECHEN**
MULTI-STAGE RESISTANCE WELDING OF SANDWICH PLATES
MULTI-STAGE SOUDAGE PAR RÉSISTANCE DES PLAQUES SANDWICH

(30) Priorität: 12.11.2013 DE 102013112436
(43) Veröffentlichungstag der Anmeldung: 21.09.2016
(73) Patentinhaber: ThyssenKrupp Steel Europe AG, 47166 Duisburg (DE); thyssenkrupp AG, 45143 Essen (DE)
(72) Erfinder: CHERGUI, Azeddine, 44139 Dortmund (DE)
(74) Vertreter: thyssenkrupp Intellectual Property GmbH
(86) Internationale Anmeldenummer: PCT/EP2014/002955
(87) Internationale Veröffentlichungsnummer: WO 2015/070959

(56) Entgegenhaltungen:
- WO-A1-2011/017722
- WO-A1-2013/020636
- DE-A1-102011 100 495
- JP-A- S61 115 687
- US-A- 4 072 843

## Beschreibung

Die Erfindung betrifft ein Verfahren zum Widerstandsschweißen eines Sandwichblechs mit mindestens einem weiteren metallischen Bauteil, wobei das Sandwichblech zwei metallische Deckschichten und eine zwischen den metallischen Deckschichten angeordnete thermoplastische Kunststoffschicht aufweist, bei welchem zumindest der zu schweißende Bereich des Sandwichblechs derart erwärmt wird, dass die thermoplastische Kunststoffschicht aufweicht und durch Zusammendrücken der Deckschichten aus dem Schweißbereich verdrängt wird, die Deckschichten mit dem weiteren Bauteil durch einen elektrischen Stromfluss über eine erste und zweite Schweißelektroden miteinander verschweißt werden, wobei die erste Schweißelektrode mit einer metallischen Deckschicht des Sandwichblechs und die zweite Schweißelektrode mit dem metallischen Bauteil Kontakt hat.

Die steigende Nachfrage nach Leichtbaukonzepten im Kraftfahrzeugbereich rückt die Verwendung von Sandwichblechen, welche zwischen zwei metallischen dünnen Deckschichten eine thermoplastische Kunststoffschicht aufweisen, in den Vordergrund, um unter Verwendung von Sandwichblechen die Gewichtseinsparungspotentiale im Kraftfahrzeugbau weiter zu vergrößern. Sandwichbleche werden beispielsweise bandförmig durch Kaschieren eines metallischen Bandes mit einer durchgehenden, thermoplastischen Kunststoffschicht und einem weiteren metallischen Band hergestellt und zu Blechen vereinzelt. Sandwichbleche können verschiedene, sich ausschließende Eigenschaften bereitstellen, welche neue Gewichtseinsparpotentiale eröffnen. So weisen Sandwichbleche aufgrund der Kunststoffschicht ein deutlich geringeres Gewicht als Vollbleche auf und stellen gleichzeitig hohe Festigkeitswerte zur Verfügung. Darüber hinaus sind die Sandwichbleche schalldämpfend und bieten eine hohe Steifigkeit. Nachteilig bei Sandwichblechen ist allerdings, dass diese eine elektrisch isolierende Kunststoffschicht aufweisen, welche bei Schmelzschweißverfahren Probleme in Bezug auf die Ausbildung einer einwandfreien Schweißverbindung verursacht. Aufgrund der mangelnden Eignung der Sandwichbleche für das Verschweißen, beispielsweise für ein Widerstandsschweißen mit anderen metallischen Bauteilen, werden Sandwichbleche daher häufig verklebt oder mechanisch miteinander gefügt.

Aus der deutschen Offenlegungsschrift DE 10 2011 109 708 A1 ist ein Verfahren zum Fügen eines Sandwichblechs mit einem weiteren metallischen Bauteil bekannt, bei welchem die Zwischenschicht im Verbindungsbereich aufgeschmolzen wird und aus dem Verbindungsbereich verdrängt wird, so dass anschließend durch Herstellen eines elektrischen Kontakts zwischen dem Bauelement und den Deckschichten des Sandwichblechs eine Schweißverbindung erzeugt werden kann. Es wird vorgeschlagen, die Erwärmung der Fügebereiche durch temperierbare Elektroden oder Presselemente durchzuführen. Die Schweißelektroden oder Presselemente sind hierzu beispielsweise mit Heizelementen versehen. Der Aufbau der Schweißelektroden wird damit relativ kompliziert. Darüber hinaus kann die Geschwindigkeit des Erwärmens der thermoplastischen Kunststoffschicht noch weiter gesteigert werden, so dass kürzere Zykluszeiten erreicht werden können.

Aus der US-Patentschrift US 4,650,951 ist darüber hinaus ein Verfahren zum Widerstandsschweißen zweier Verbundbleche bekannt, welches zwei Schweißelektroden verwendet, die beheizt sind und so die zwischen den Deckschichten liegende Kunststoffschicht erwärmen und verdrängen, bevor das eigentliche Verschweißen beginnt.

Aus der noch nicht veröffentlichten deutschen Patentanmeldung DE 10 2013 108 563 ist darüber hinaus ein Verfahren bekannt, bei welchem zwei Stromkreise verwendet werden, um ein Sandwichblech mit einem weiteren metallischen Bauteil durch Widerstandsschweißen zu verbinden. Das Verfahren teilt sich dabei in zwei Schritte auf, einerseits in einen Vorwärmschritt, bei welchem über einen Vorwärmstrom der zu schweißende Bereich erwärmt wird und der thermoplastische Kunststoff aus dem zu verschweißenden Bereich des Sandwichblechs verdrängt wird. Andererseits wird nach dem Vorwärmen durch Anlegen eines Schweißstroms das Sandwichblech mit dem metallischen Bauteil verschweißt. Es hat sich jedoch herausgestellt, dass es bei dieser Vorgehensweise zu einem Kurzschluss beim Kontakt der Deckbleche bei noch angelegtem Vorwärmstrom kommen kann und dadurch Spritzer im Sandwichblech entstehen, die zu einer Blasenbildung bzw. Delamination führen können.

Hiervon ausgehend ist es Aufgabe der vorliegenden Erfindung, ein einfaches Verfahren zum Widerstandsschweißen von Sandwichblechen zur Verfügung zu stellen, mit welchem innerhalb einer kurzen Zykluszeit ein Sandwichblech mit einem weiteren metallischen Bauteil gefügt werden kann, ohne dass es zur Ausbildung von Blasen und Fehlern im Sandwichbauteil kommt.

Gemäß der Lehre der vorliegenden Erfindung wird die aufgezeigte Aufgabe dadurch gelöst, dass das Widerstandsschweißen mindestens die folgenden Schritte umfasst:
- (A) Erwärmen des zu schweißenden Bereichs des Sandwichblechs durch einen Vorwärmstrom, wobei der Vorwärmstrom über eine Überbrückung zwischen der ersten Schweißelektrode und dem zu verschweißenden metallischen Bauteil fließt, und Verdrängen des Kunststoffs zwischen den metallischen Deckschichten des Sandwichblechs im Schweißbereich durch Aufbringen einer Schweißkraft auf die erste und zweite Schweißelektrode, so dass die metallischen Deckschichten des Sandwichblechs aufeinander gedrückt werden,
- (B) Erzeugen einer Haftschweißung zwischen den metallischen Deckschichten des Sandwichblechs unter Verwendung eines Haftschweißstroms zwischen der ersten und zweiten Schweißelektrode,
- (C) Verschweißen der haftgeschweißten, metallischen Deckschichten des Sandwichblechs mit dem Bauteil durch einen Schweißstrom.

Dadurch, dass die metallischen Deckschichten des Sandwichblechs gemäß der Lehre der vorliegenden Erfindung zunächst durch eine Haftschweißung verbunden werden und anschließend erst mit dem metallischen Bauteil verschweißt werden, kann wirkungsvoll die Entstehung von Spritzern, welche zu Fehlern im Sandwichbauteil führen, verhindert werden. Bei der direkten Verschweißung werden die bei der Verdrängung der Kunststoffschicht noch verbleibenden Kunststoffreste auf den inneren Seiten der metallischen Deckschichten innerhalb sehr kurzer Zeit zum Schmelzen bzw. Verdampfen gebracht. Die entstehenden Gase führen zur Blasenbildung bzw. Delamination. Zudem können auch Spritzer durch Verdampfen von Beschichtungsanteilen der metallischen Deckschichten im Inneren des Sandwichblechs mit Kunststoffresten interagieren, so dass es unmittelbar um den Verbindungsbereich zu einer Blasenbildung bzw. Delamination kommen kann. Bei der Haftschweißung wir der Energieeintrag dagegen gering gehalten, so dass die metallischen Deckschichten nicht vollständig aufgeschmolzen werden, sondern nur die Grenzschicht zwischen beiden metallischen Deckschichten eine stoffschlüssige Verbindung eingeht. Da der Rest des Metalls nicht auf Schmelztemperatur ist, wird der Kunststoff in unmittelbarer Nähe nicht auf Verdampfungstemperatur gebracht, so dass eine schonende Entfernung der Kunststoffreste zwischen den metallischen Deckschichten vor und/oder während der Haftschweißung erfolgt. Anschließend kann der Schritt des Verschweißens der metallischen Deckschichten des Sandwichblechs mit dem metallischen Bauteil erfolgen, ohne dass es zu einer Blasenbildung bzw. Delamination in benachbarten Bereichen des Sandwichbleches kommt.

Erfindungsgemäß fließt der Vorwärmstrom über eine Überbrückung zwischen der ersten Schweißelektrode und dem zu verschweißenden metallischen Bauteil, wodurch verhindert werden kann, dass der Strom direkt über ein Deckblech geführt wird, um Schäden wie beispielsweise eine Delamination zwischen dem Deckblech und der Kunststoffschicht infolge einer zu hohen Erwärmung zu unterdrücken.

Gemäß einer ersten Ausgestaltung erfolgt eine Widerstandsmessung zwischen der ersten und zweiten Schweißelektrode, so dass bei Abfall des elektrischen Widerstands zwischen den Schweißelektroden der Vorwärmstrom reduziert oder abgeschaltet wird. Über die Widerstandsmessung zwischen den beiden Schweißelektroden ist es möglich, den Prozess des Verdrängens der thermoplastischen Kunststoffschicht aus dem zu verschweißenden Bereich im Sandwichblech zu überwachen. Nähern sich die metallischen Deckschichten des Sandwichblechs an, sinkt nämlich der elektrische Widerstand zwischen der ersten und zweiten Schweißelektrode rasch ab, wobei dieser bei weiterhin konstant gehaltener Schweißkraft auf die beiden Schweißelektroden bei metallischem Kontakt zwischen den beiden metallischen Deckschichten langsamer auf ein Minimum sinkt. Über die Widerstandsmessung kann somit der Vorwärmstrom über eine Steuerung abhängig von dem Verdrängen des Kunststoffs aus dem zu verschweißenden Bereich eingestellt bzw. abgeschaltet werden.

Eine weitere Verbesserung des Verfahrens wird gemäß einer nächsten Ausführungsform dadurch erreicht, dass nach der Reduktion des Vorwärmstroms auf einen vordefinierten ersten Wert oder Abschalten des Vorwärmstroms die beiden Schweißelektroden weiter zusammengefahren werden, bis sich die Deckbleche im zu verbindenden Bereich vollständig berühren. Zur Erzeugung einer Haftschweißung zwischen der ersten und der zweiten Schweißelektrode wird ein Haftschweißstrom zwischen den metallischen Deckschichten des Sandwichblechs eingestellt, wobei optional der Haftschweißstrom kleiner als der Schweißstrom ist. Es hat sich herausgestellt, dass eine weitere Verbesserung bei der Vermeidung von Spritzern und den damit entstehenden Blasen bzw. Delamination im Sandwichblech dadurch erreicht wird, dass der Haftschweißstrom zwischen der ersten und zweiten Schweißelektrode erst dann eingeschaltet wird, wenn der Vorwärmstrom bereits auf einen vordefinierten, beispielsweise sehr geringen Wert abgefallen ist oder ganz abgeschaltet wurde und sich die Deckbleche im zu verbindenden Bereich im Wesentlichen vollständig berühren. Hierdurch wird der Wärmeeintrag in das Sandwichblech besser kontrolliert. Optional ist der Haftschweißstrom kleiner als der Schweißstrom, welcher zur Verschweißung der metallischen Deckschichten mit dem metallischen Bauteil verwendet wird. Durch diese Maßnahme wird der Bereich der in Kontakt stehenden metallischen Deckschichten schonend erwärmt und eine verbesserte Kontrollierbarkeit der Haftschweißung der metallischen Deckschichten erreicht.

Vorzugsweise sinkt der elektrische Widerstand zwischen der ersten und zweiten Schweißelektrode während des Vorwärmens und Aufeinanderdrückens der Schweißelektroden auf einen ersten vordefinierten Widerstandswert ab, so dass bei Erreichen des vordefinierten ersten Widerstandswerts der Vorwärmstrom reduziert bzw. abgeschaltet wird, um einen Kurzschluss bei vollständigem Kontakt der Deckbleche zu vermeiden. Hierdurch kann das Einschalten des Haftschweißstroms erst dann ausgelöst werden, wenn beispielsweise zwischen den metallischen Deckschichten nahezu kein Kunststoff mehr vorhanden ist.

Bevorzugt wird der Haftschweißstrom unter Verwendung einer Rampenfunktion auf seinen maximalen Wert eingestellt. Auch hierdurch wird erreicht, dass noch verbleibende Kunststoffreste zwischen den metallischen Deckschichten schonend erwärmt und über die durch die Schweißelektroden aufgebrachte Schweißkraft aus dem Zwischenraum zwischen den metallischen Deckschichten entfernt werden kann.

Gemäß einer weiteren Ausgestaltung des Verfahrens wird bei Erreichen eines vordefinierten, zweiten elektrischen Widerstandswertes zwischen erster und zweiter Schweißelektrode ein Schweißstrom zum Schweißen des Sandwichblechs mit dem Bauteil im ersten Stromkreis eingestellt. Der elektrische Widerstandswert korreliert, wie bereits ausgeführt, mit der Menge an Kunststoff, welche sich noch zwischen den metallischen Deckschichten befindet. Der vordefinierte zweite Widerstandswert kann daher dazu genutzt werden, den Anteil an verbliebenem Kunststoff zwischen den metallischen Deckschichten derart einzustellen, dass die Gefahr von metallischen Spritzern beim Verschweißen der metallischen Deckschichten mit dem metallischen Bauteil die Gefahr von Spritzern innerhalb des Sandwichblechs deutlich reduziert wird.

Auch der Schweißstrom wird gemäß einer weiteren Ausgestaltung des Verfahrens unter Verwendung einer Rampenfunktion auf seinen maximalen Wert eingestellt. Unter einer Rampenfunktion wird ein zeitlich ansteigender Schweißstrom bzw. Haftschweißstrom verstanden, welcher in einen Maximalwert mündet. Dieser kann beispielsweise für eine gewisse Zeit konstant gehalten werden.

Um durch die Geschwindigkeit des Verdrängens des thermoplastischen Kunststoffs aus dem zu verschweißenden Bereich des Sandwichblechs die Gefahr von Fehlern im Sandwichblech zu verringern, wird gemäß einer weiteren Ausgestaltung die Schweißkraft zwischen erster und zweiter Schweißelektrode zumindest solange erhöht, bis der elektrische Widerstand zwischen erster und zweiter Schweißelektrode abfällt. Hierdurch wird bewusst der Bereich des Flüssigwerdens des thermoplastischen Kunststoffs und damit die Annäherung der metallischen Deckschichten gegeneinander ausgenutzt, um ein möglichst schonendes Verdrängen des thermoplastischen Kunststoffs aus dem zu verschweißenden Bereich zu erreichen.

Es hat sich ferner herausgestellt, dass gemäß einer weiteren Ausgestaltung des Verfahrens es vorteilhaft ist, dass die Schweißkraft konstant gehalten wird, sobald der elektrische Widerstand zwischen erster und zweiter Schweißelektrode auf einen vordefinierten dritten Widerstandswert abgefallen ist. Der vordefinierte dritte Widerstandswert kann kleiner oder größer als der elektrische Widerstand zwischen den Schweißelektroden sein, bei welchem der Haftschweißstrom eingeschaltet wird. Beide Widerstandswerte können aber auch identisch sein.

Schließlich kann gemäß einer besonders einfachen Ausgestaltung der Vorwärmstrom auch nach einer festen Vorwärmdauer abgeschaltet werden. Beispielsweise kann die Vorwärmdauer abhängig vom eingestellten Vorwärmstrom und dem jeweilig zu verschweißenden Sandwichblech in Kombination mit dem zu verschweißenden Bauteil empirisch bestimmt werden, indem empirisch ein Zeitintervall bei eingeschaltetem Vorwärmstrom und anstehender Schweißkraft ermittelt wird, innerhalb welchem der elektrische Widerstand zwischen der ersten und zweiten Schweißelektrode stark abfällt. Der Vorwärmstrom kann dann so eingestellt werden, dass der Widerstandsabfall erst nach Abschalten des Vorwärmstroms erfolgt, da durch das Erweichen des Kunststoffes der Widersandsabfall leicht zeitverzögert einsetzt. Prinzipiell ist es auch möglich, den Zeitpunkt des Einschaltens des Haftschweißstroms und/oder des Schweißstroms abhängig vom Ausschalten des Vorwärmstroms fest einzustellen, wobei bevorzugt die Einschaltzeitpunkte durch empirische Schweißversuche zwischen Bauteil und Sandwichblech festgelegt werden. Hierdurch kann beispielsweise ein Widerstandsschweißen ohne gleichzeitige Widerstandsmessung erfolgen.

Im Weiteren soll die Erfindung anhand von Ausführungsbeispielen in Verbindung mit der Zeichnung näher erläutert werden. Die Zeichnung zeigt in
- Fig. 1a, b: in einer schematischen Schnittansicht die Entstehung von Fehlern im Sandwichblech durch Spritzer,
- Fig.2 a, b, c: in einer schematischen Schnittdarstellung ein Ausführungsbeispiel einer Vorrichtung zur Durchführung des erfindungsgemäßen Verfahrens zu unterschiedlichen Zeitpunkten,
- Fig. 3: in einem Diagramm der zeitliche Ablauf eines Ausführungsbeispiels des erfindungsgemäßen Verfahrens und
- Fig. 4: in einem Diagramm ein weiteres Ausführungsbeispiel des erfindungsgemäßen Verfahrens.

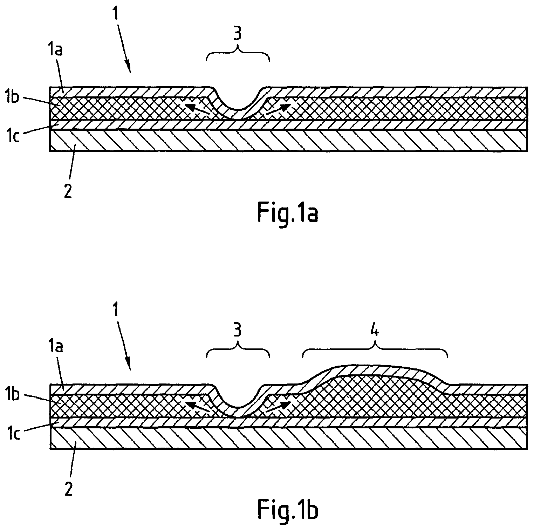

Zunächst zeigt Fig. 1a) in einer schematischen Schnittansicht den Ausgangszustand beim Verschweißen eines Sandwichblechs 1, welches aus zwei metallischen Deckschichten 1a, 1c und einer thermoplastischen Kunststoffschicht 1b, welche zwischen den beiden Deckschichten 1a, 1c angeordnet ist, besteht. In dem zu verschweißenden Bereich 3 sind die metallischen Deckschichten 1a und 1c bereits in Kontakt gebracht. Bei Verwendung der konventionellen Widerstandsschweißverfahren entstehen insbesondere beim Kontakt der Deckbleche und eingeschaltetem Vorwärmstrom jedoch Spritzer innerhalb des Sandwichblechs, welche hier mit Pfeilen angedeutet sind. Die Spritzer können auch vom zu schnellen Erwärmen des Kunststoffes stammen, welcher verdampft und ggf. flüssiges Metall insbesondere das der Beschichtung der Deckschichten mitnimmt. Die Spritzer führen, wie in Fig. 1b) dargestellt, in einem vom Schweißbereich 3 benachbarten Bereich 4 zu einem lokalen Verdampfen des Kunststoffes durch die heißen Spritzer, so dass beispielsweise typische Schweißfehler wie Aufwölbungen im Sandwichblech zu erkennen sind.

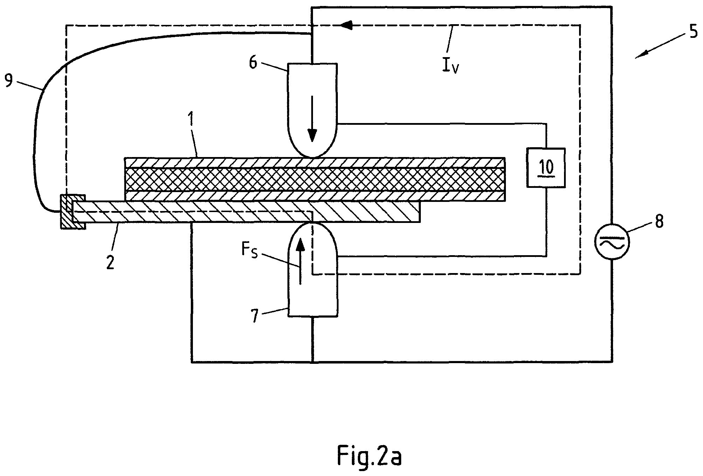

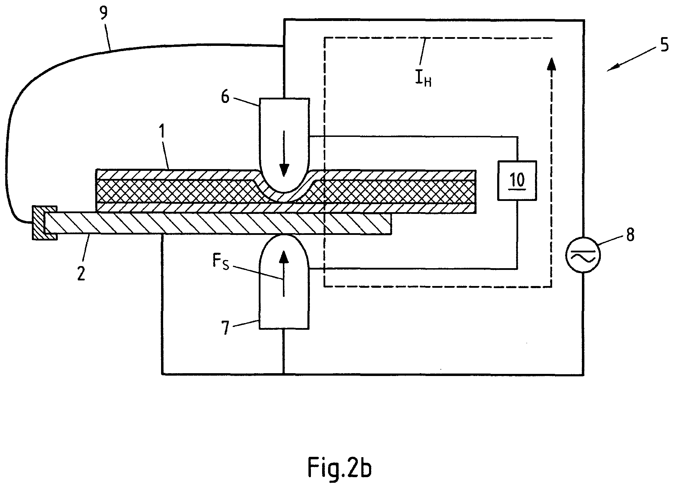

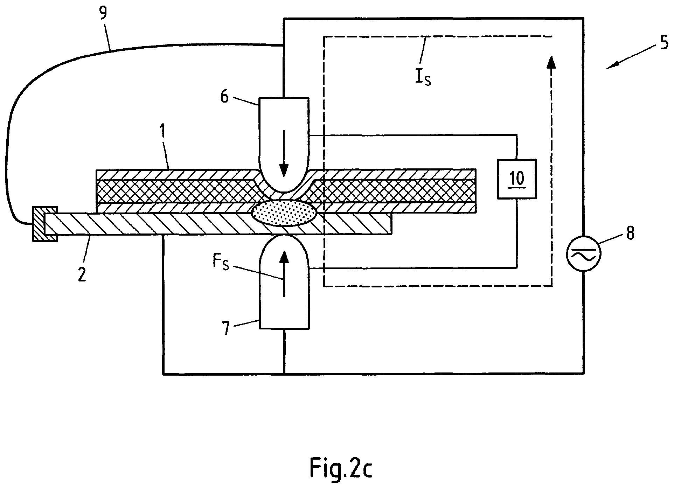

Ein Ausführungsbeispiel einer für die Verschweißung von Sandwichblechen mit metallischen Bauteilen verwendbare Vorrichtung ist schematisch in den Fig. 2 a bis c dargestellt. Die Vorrichtung 5 zum Verschweißen von Sandwichblechen 1 mit metallischen Bauteilen 2 weist zunächst eine erste und eine zweite Schweißelektrode 6, 7 sowie einen zwischen den beiden Schweißelektroden bereitgestellten Vorwärmstrom Iᵥ auf. Der Vorwärmstrom Iᵥ wird von einer Stromquelle bzw. Spannungsquelle 8 erzeugt. Der Strom verläuft von der Spannungsquelle 8 über eine Überbrückung 9 zwischen der ersten Schweißelektrode 6 und dem zu verschweißenden metallischen Bauteil 2. Dadurch ist gewährleistet, dass keine direkte Erwärmung der Deckbleche erfolgt, wodurch ein zu hoher Wärmeeintrag verhindert und eine Delamination des Sandwichblechs unterdrückt werden kann. Nach dem Einschalten des Vorwärmstromes Iᵥ werden die Schweißelektroden 6, 7 mittels einer Schweißkraft Fₛ gegeneinander gedrückt, um den erwärmten Kunststoff aus dem zu verschweißenden Bereich zu verdrängen (Fig. 2a). Kurz vor dem Kontaktieren der beiden Deckbleche im zu verschweißenden Bereich wird der Vorwärmstrom Iᵥ reduziert bzw. vorzugsweise abgeschaltet, wohingegen die Schweißelektroden 6, 7 weiter gegeneinander verfahren bzw. gedrückt werden, bis die Deckbleche vollständig in Kontakt stehen.

Nach Kontaktierung der beiden Deckbleche wird ein Haftschweißstrom I_{H} von der Spannungsquelle 8 bereitgestellt, wodurch kontrolliert eine stoffschlüssige Verbindung in der Grenzschicht zwischen den beiden Deckblechen erzeugt werden kann (Fig. 2b). Der Haftschweißstrom I_{H} fließt aufgrund des geringeren elektrischen Widerstands durch die metallischen Deckschichten 1a, 1c zur zweiten Elektrode und nur zu einem kleinen Teil noch über die Überbrückung 9. Nach Bereitstellung eines elektrischen Durchgangs im Sandwichblech durch moderaten Wärmeeintrag wird anschließend ein Schweißstrom I_{S} bereitgestellt, der die Deckbleche im Schweißbereich aufschmilzt, um die Deckbleche untereinander und mit dem metallischen Bauteil stoffschlüssig zu verbinden (Fig. 2c). In den Fig. 2 a bis c eine Vorrichtung zur Messung des elektrischen Widerstands 10 vorgesehen, welche den elektrischen Widerstand zwischen der ersten Schweißelektrode 6 und der zweiten Schweißelektrode 7 misst.

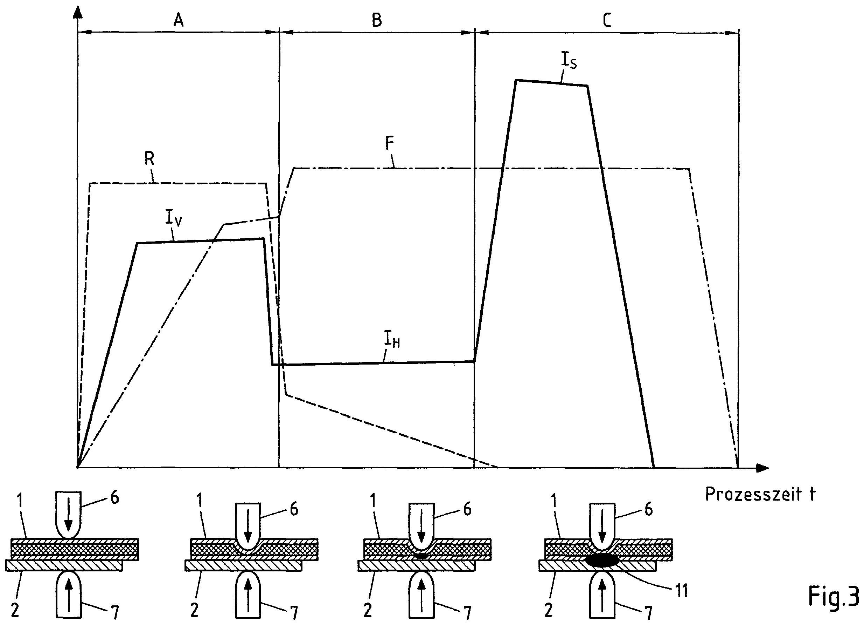

In Fig. 3 ist ein erstes Ausführungsbeispiel des erfindungsgemäßen Verfahrens anhand eines Prozessdiagramms mit den zugehörigen, schematischen Schnittdarstellungen des Sandwichblechs und des metallischen Bauteils dargestellt. In dem Diagramm ist auf der x-Achse die Prozesszeit t und auf der Ordinate qualitativ die Werte des Vorwärmstroms I_{V}, des Haftschweißstromes I_{H}, der Schweißstrom I_{S} sowie der elektrische Widerstand R zwischen der ersten und der zweiten Schweißelektrode abhängig von der Prozesszeit t aufgetragen.

Erfindungsgemäß wird das Verschweißen des Sandwichblechs 1 mit dem metallischen Bauteil 2 in drei Schritte unterteilt. In Schritt A wird der zu schweißenden Bereich des Sandwichblechs durch einen Vorwärmstrom erwärmt und der Kunststoffs zwischen den metallischen Deckschichten des Sandwichblechs im Schweißbereich durch Aufbringen einer Schweißkraft auf die erste und zweite Schweißelektrode verdrängt, so dass die metallischen Deckschichten des Sandwichblechs aufeinander gedrückt werden. Im nächsten Schritt B fließt zwischen den Schweißelektroden 6, 7 ein Haftschweißstrom I_{H} zur Erzeugung einer Haftschweißung zwischen den metallischen Deckschichten des Sandwichblechs. Anschließend werden im Schritt C die haftgeschweißten, metallischen Deckschichten des Sandwichblechs mit dem Bauteil durch einen Schweißstrom verschweißt.

Wie dem Diagramm der Fig. 3 zu entnehmen ist, wird der Vorwärmstrom I_{V} bei Abfall des Widerstands R zwischen den beiden zwei Schweißelektroden 6 und 7 im Verfahrensschritt A stark reduziert und ein Haftschweißstrom I_{H} angelegt. Im Verfahrensschritt B werden die metallischen Deckschichten miteinander haftgeschweißt, so dass der zwischen den metallischen Deckschichten vorhandene restliche Kunststoff ohne die Entstehung von Spritzern im Sandwichblech, schonend aus diesem Bereich entfernt wird. Darüber hinaus liegt nach der Haftschweißung zwischen den metallischen Deckschichten eine stoffschlüssige Verbindung vor, so dass es nicht mehr zu Spritzern innerhalb des Sandwichblechs bei Annlegen des Schweißstroms I_{S} kommen kann.

Der Schweißstrom I_{S} wird nach Abschluss der Haftschweißung der metallischen Deckschichten eingeschaltet. Bevorzugt erfolgt das Einschalten des Schweißstrom I_{S} mit einer Rampenfunktion, so dass der Schweißstrom zeitlich ansteigt und bis zum Maximalwert erhöht wird. Nach erfolgter Verschweißung der metallischen Deckschichten mit dem metallischen Bauteil, kann der Schweißstrom I_{S} wieder auf Null reduziert werden.

In dem Diagramm der Fig. 3 ist zusätzlich die Schweißkraft F dargestellt, mit welcher die beiden Schweißelektroden 6 und 7 gegeneinander gepresst werden. Zu erkennen ist, dass die Schweißkraft F während des Vorwärmschritts A ansteigt und zu Beginn der Haftschweißung einen Maximalwert erreicht. Die Schweißkraft F wird auf diesem Maximalwert belassen und erst nach Abheben der Schweißelektroden von dem gefügten Sandwichblech auf Null reduziert.

Unterhalb des Diagramms sind zu den jeweiligen Zeitpunkten in einer sehr schematischen Darstellung die Schweißelektroden 6, 7 sowie das Sandwichblech 1 und das Bauteil 2 dargestellt. Nach dem Vorwärmen gemäß Schritt A sind die metallischen Deckschichten des Sandwichblechs 1 in metallischem Kontakt, so dass der Widerstand R stark abfällt. In diesem Zustand wird der Haftschweißstrom I_{H} im Verfahrensschritt B eingeschaltet und eine Haftschweißung zwischen den metallischen Deckschichten des Sandwichblechs erzeugt. Aufgrund der geringeren Dicken der metallischen Deckschichten des Sandwichblechs werden nur geringere Haftschweißströme I_{H} benötigt. Beim Verschweißen der metallischen Deckschichten mit dem Bauteil 2 wird in der Regel, wie auch in Fig. 3 dargestellt, ein größerer Schweißstrom I_{S} benötigt, wie Verfahrensschritt C zeigt. Allerdings ist auch der Haftschweißstrom variabel und an die Konfiguration der Verbindungspartner anpassbar.

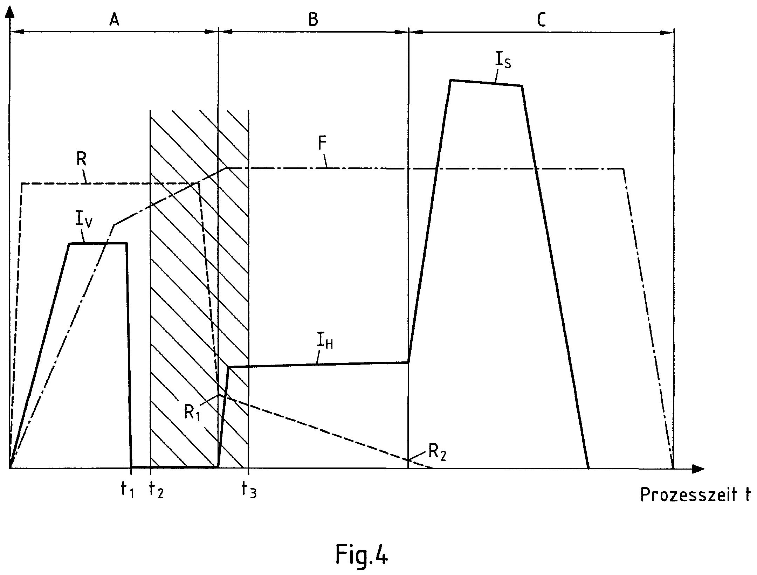

In dem in Fig. 4 dargestellten Ausführungsbeispiel sind ebenfalls die Verfahrensschritte A, B, C abhängig von der Prozesszeit t dargestellt. In dem in Fig. 4 dargestellten Ausführungsbeispiels ist der Vorwärmstrom I_{V} für eine feste Zeitdauer t₁ eingestellt, so dass eine ausreichende Erwärmung erzielt wird und sichergestellt ist, dass der Vorwärmstrom I_{V} während des Abfall des elektrischen Widerstands R zwischen der ersten und zweiten Schweißelektrode 6, 7 bereits abgeschaltet ist. Sinkt der elektrische Widerstand zwischen der ersten und zweiten Schweißelektrode auf einen ersten vordefinierten Widerstandswert R₁ ab, so wird der Haftschweißstrom I_{H} eingeschaltet und über eine Rampenfunktion auf seinen Maximalwert erhöht. Durch die verlangsamte Erhöhung des Haftschweißstroms I_{H} wird erreicht, dass die Gefahr von Spritzern innerhalb des Sandwichblechs bei der Haftschweißung der metallischen Deckschichten des Sandwichblechs reduziert wird. Mit der Haftschweißung während des Verfahrensschritts B sinkt der elektrische Widerstand R, wie in Fig. 4 abzulesen ist, weiter bis auf den zweiten vordefinierten Widerstandswert R₂ ab, so dass bei Erreichen des Widerstandswerts R₂ der Schweißstrom I_{S} eingeschaltet werden kann. Auch in Fig. 4 ist zu erkennen, dass der Schweißstrom I_{S} größer ist als der Haftschweißstrom I_{H}.

Um die feste Vorwärmdauer bis zum Zeitpunkt t₁ einzustellen, können beispielsweise Analysen von empirischen Versuchen herangezogen werden, um einen Prozesszeitbereich t₂ bis t₃ festzulegen, in welchem mit hoher Wahrscheinlichkeit der Widerstandsabfall aufgrund des Kontaktes der metallischen Deckschichten miteinander erfolgt. Ist das Intervall t₂ bis t₃ definiert, kann die Zeitdauer t₁ fest eingestellt werden, so dass der Vorwärmstrom I_{V} ausgeschaltet ist, sobald der Haftschweißstrom I_{H} eingeschaltet wird.

Im Ergebnis kann mit geringer Prozesszeit und nahezu unter Ausschluss der Gefahr von der Erzeugung von Fehlstellen im Sandwichblech 1 durch Spritzer das Verschweißen von Sandwichblechen mit metallischen Bauteilen 2 durchgeführt werden.

## Patentansprüche

1. Verfahren zum Widerstandsschweißen eines Sandwichblechs (1) mit mindestens einem weiteren metallischen Bauteil (2), wobei das Sandwichblech (1) zwei metallische Deckschichten (1a, 1c) und eine zwischen den metallischen Deckschichten angeordnete thermoplastische Kunststoffschicht (1b) aufweist, bei welchem zumindest der zu schweißende Bereich (3) des Sandwichblechs (1) derart erwärmt wird, dass die thermoplastische Kunststoffschicht (1b) aufweicht und durch Zusammendrücken der Deckschichten (1a, 1c) aus dem Schweißbereich (3) verdrängt wird, die Deckschichten (1a, 1c) mit dem weiteren Bauteil (2) durch einen elektrischen Stromfluss über eine erste und zweite Schweißelektroden (6, 7) miteinander verschweißt werden, wobei die erste Schweißelektrode (6) mit einer metallischen Deckschicht (1a) des Sandwichblechs (1) und die zweite Schweißelektrode (7) mit dem metallischen Bauteil (2) Kontakt hat, wobei das Widerstandsschweißen mindestens die folgenden Schritte umfasst:
- (A) Erwärmen des zu schweißenden Bereichs (3) des Sandwichblechs (1) durch einen Vorwärmstrom (Iv), wobei der Vorwärmstrom (Iv) über eine Überbrückung (9) zwischen der ersten Schweißelektrode (6) und dem zu verschweißenden metallischen Bauteil (2) fließt, und Verdrängen des Kunststoffs zwischen den metallischen Deckschichten (1a, 1c) des Sandwichblechs (1) im Schweißbereich (3) durch Aufbringen einer Schweißkraft (F) auf die erste und zweite Schweißelektrode (6, 7), so dass die metallischen Deckschichten (1a, 1c) des Sandwichblechs (1) aufeinander gedrückt werden,
- (B) Erzeugen einer Haftschweißung zwischen den metallischen Deckschichten (1a, 1c) des Sandwichblechs (1) unter Verwendung eines Haftschweißstroms (Ih) zwischen der ersten und zweiten Schweißelektrode (6, 7),
- (C) Verschweißen der haftgeschweißten, metallischen Deckschichten (1a, 1c) des Sandwichblechs (1) mit dem Bauteil (2) durch einen Schweißstrom (Is).

2. Verfahren nach Anspruch 1,
**dadurch gekennzeichnet, dass**
eine Widerstandsmessung (10) zwischen der ersten und zweiten Schweißelektrode (6, 7) erfolgt und bei Abfall des elektrischen Widerstands (R) zwischen den Schweißelektroden (6, 7) der Vorwärmstrom (Iv) reduziert oder abgeschaltet wird.

3. Verfahren nach einem Anspruch 1 oder 2,
**dadurch gekennzeichnet, dass**
nach Reduktion des Vorwärmstroms (Iv) auf einen vordefinierten ersten Wert oder Abschalten des Vorwärmstroms (Iv) ein Haftschweißstrom (Ih) zwischen der ersten und zweiten Schweißelektrode (6, 7) zur Erzeugung einer Haftschweißung zwischen den metallischen Deckschichten (1a, 1c) des Sandwichblechs (1) eingestellt wird, wobei optional der Haftschweißstrom (Ih) kleiner als der Schweißstrom (Is) ist.

4. Verfahren nach einem der Ansprüche 1 bis 3,
**dadurch gekennzeichnet, dass**
der elektrische Widerstand (R) zwischen der ersten und zweiten Schweißelektrode (6, 7) auf einen ersten vordefinierten Widerstandswert (R1) absinkt und bei Erreichen des vordefinierten ersten Widerstandswertes (R1) der Haftschweißstrom (Ih) eingeschaltet wird.

5. Verfahren nach einem der Ansprüche 1 bis 4,
**dadurch gekennzeichnet, dass**
der Haftschweißstrom (Ih) unter Verwendung einer Rampenfunktion auf seinen maximalen Wert eingestellt wird.

6. Verfahren nach einem Ansprüche 1 bis 5,
**dadurch gekennzeichnet, dass**
bei Erreichen eines vordefinierten zweiten elektrischen Widerstandswertes (R2) zwischen erster und zweiter Schweißelektrode (6, 7) ein Schweißstrom (Is) zum Schweißen des Sandwichblechs (1) mit dem Bauteil (2) eingestellt wird.

7. Verfahren nach einem Ansprüche 1 bis 6,
**dadurch gekennzeichnet, dass**
der Schweißstrom (Is) unter Verwendung einer Rampenfunktion auf seinen maximalen Wert eingestellt wird.

8. Verfahren nach einem der Ansprüche 1 bis 7,
**dadurch gekennzeichnet, dass**
die Schweißkraft (F) zwischen erster und zweiter Schweißelektrode (6, 7) zumindest solange erhöht wird, bis der elektrische Widerstand (R) zwischen erster und zweiter Schweißelektrode (6, 7) abfällt.

9. Verfahren nach einem der Ansprüche 1 bis 8,
**dadurch gekennzeichnet, dass**
die Schweißkraft (F) konstant gehalten wird, sobald der elektrische Widerstand (R) zwischen erster und zweiter Schweißelektrode (6, 7) auf einen vordefinierten dritten Widerstandswert abgefallen ist.

10. Verfahren nach einem der Ansprüche 1 bis 9,
**dadurch gekennzeichnet, dass**
der Vorwärmstrom (Iv) nach einer festen Vorwärmdauer (t1) abgeschaltet wird.

## Claims

1. Method for resistance welding a sandwich panel (1) to at least one further metallic component (2), the sandwich panel (1) having two metallic cover layers (1a, 1c) and one thermoplastic plastics-material layer (1b) interdisposed between the metallic cover layers, in which method at least that region (3) of the sandwich panel (1) that has to be welded is heated in such a manner that the thermoplastic plastics-material layer (1b) is softened and by compression of the cover layers (1a, 1c) is displaced from the welding region (3), the cover layers (1a, 1c) and the further component (2) are welded together by an electric current flowing by way of a first and a second welding electrode (6, 7), the first welding electrode (6) being in contact with a metallic cover layer (1a) of the sandwich panel (1), and the second welding electrode (7) being in contact with the metallic component (2), wherein
resistance welding comprises at least the following steps:
- (A) heating that region (3)of the sandwich panel (1) that is to be welded by a preheating current (Iv), wherein the preheating current (Iv) flows via a bypass (9) between the first welding electrode (6) and the metallic component (2) to be welded, and displacing the plastics material between the metallic cover layers (1a, 1c) of the sandwich panel (1) in the welding region (3) by applying a welding force (F) to the first and second welding electrode (6, 7) such that the metallic cover layers (1a, 1c) of the sandwich panel (1) are pressed onto one another,
- (B) generating a tack weld between the metallic cover layers (1a, 1c) of the sandwich panel (1), using a tack-welding current (Ih) between the first and second welding electrode (6, 7),
- (C) welding the tack-welded metallic cover layers (1a, 1c) of the sandwich panel (1) to the component (2) by way of a welding current (Is) .

2. Method according to Claim 1,
**characterized in that**
resistance measuring (10) is performed between the first and second welding electrode (6, 7) and the preheating current (Iv) is reduced or switched off in the case of a drop in the electrical resistance (R) between the welding electrodes (6, 7).

3. Method according to Claim 1 or 2,
**characterized in that**
upon having reduced the preheating current (Iv) to a predefined first value, or upon having switched off the preheating current (Iv), a tack-welding current (Ih) between the first and second welding electrode (6, 7) is set for generating a tack weld between the metallic cover layers (1a, 1c) of the sandwich panel (1), the tack-welding current (Ih) optionally being lower than the welding current (Is) .

4. Method according to one of Claims 1 to 3,
**characterized in that**
the electrical resistance (R) between the first and second welding electrode (6, 7) drops to a first predefined resistance value (R1) and, upon reaching the predefined first resistance value (R1) , the tack-welding current (Ih) is switched on.

5. Method according to one of Claims 1 to 4,
**characterized in that**
the tack-welding current (Ih) is set to the maximum value thereof, using a ramping function.

6. Method according to one of Claims 1 to 5,
**characterized in that**
upon reaching a predefined second electrical resistance value (R2) between the first and the second welding electrode (6, 7), a welding current (Is) for welding the sandwich panel (1) to the component (2) is set.

7. Method according to one of Claims 1 to 6,
**characterized in that**
the welding current (Is) is set to the maximum value thereof using a ramping function.

8. Method according to one of Claims 1 to 7,
**characterized in that**
the welding force (F) between the first and the second welding electrode (6, 7) is increased at least until the electrical resistance (R) between the first and the second welding electrode (6, 7) drops.

9. Method according to one of Claims 1 to 8,
**characterized in that**
the welding force (F) is held so as to be constant, as soon as the electrical resistance (R) between the first and the second welding electrode (6, 7) has dropped to a predefined third resistance value.

10. Method according to one of Claims 1 to 9,
**characterized in that**
the preheating current (Iv) is switched off after a fixed preheating period (t1).

## Revendications

1. Procédé de soudage par résistance d'une tôle sandwich (1) avec au moins un élément structural (2) métallique supplémentaire, la tôle sandwich (1) possédant deux couches extérieures (1a, 1c) métalliques et une couche en matière plastique (1b) thermoplastique disposée entre les couches extérieures métalliques, procédé lors duquel au moins la zone (3) à souder de la tôle sandwich (1) est chauffée de telle sorte que la couche en matière plastique (1b) thermoplastique se ramollit et est refoulée hors de la zone de soudage (3) par la compression des couches extérieures (1a, 1c), les couches extérieures (1a, 1c) avec l'élément structural (2) supplémentaire sont soudées ensemble par un flux de courant électrique par le biais d'une première et d'une deuxième électrode de soudage (6, 7), la première électrode de soudage (6) étant en contact avec une couche extérieure (1a) métallique de la tôle sandwich (1) et la deuxième électrode de soudage (7) avec l'élément structural (2) métallique,
le soudage par résistance comprenant au moins les étapes suivantes :
- (A) échauffement de la zone (3) à souder de la tôle sandwich (1) par un courant de préchauffage (Iv), le courant de préchauffage (Iv) circulant par un pontage (9) entre la première électrode de soudage (6) et l'élément structural (2) métallique à souder, et refoulement de la matière plastique entre les couches extérieures (1a, 1c) métalliques de la tôle sandwich (1) dans la zone de soudage (3) en appliquant une force de soudage (F) sur la première et la deuxième électrode de soudage (6, 7), de sorte que les couches extérieures (1a, 1c) métalliques de la tôle sandwich (1) soient poussées l'une sur l'autre,
- (B) production d'un soudage par adhérence entre les couches extérieures (1a, 1c) métalliques de la tôle sandwich (1) en utilisant un courant de soudage par adhérence (Ih) entre la première et la deuxième électrode de soudage (6, 7),
- (C) soudage des couches extérieures (1a, 1c) métalliques soudées par adhérence de la tôle sandwich (1) avec l'élément structural (2) par un courant de soudage (Is).

2. Procédé selon la revendication 1, **caractérisé en ce qu'**une mesure de résistance (10) entre la première et la deuxième électrode de soudage (6, 7) est effectuée et le courant de préchauffage (Iv) est réduit ou déconnecté en cas de chute de la résistance électrique (R) entre les électrodes de soudage (6, 7).

3. Procédé selon la revendication 1 ou 2, **caractérisé en ce qu'**après la réduction du courant de préchauffage (Iv) à une première valeur prédéfinie ou la déconnexion du courant de préchauffage (Iv), un courant de soudage par adhérence (Ih) est réglé entre la première et la deuxième électrode de soudage (6, 7) de manière à produire un soudage par adhérence entre les couches extérieures (1a, 1c) métalliques de la tôle sandwich (1), le courant de soudage par adhérence (Ih) étant facultativement inférieur au courant de soudage (Is) .

4. Procédé selon l'une des revendications 1 à 3, **caractérisé en ce que** la résistance électrique (R) entre la première et la deuxième électrode de soudage (6, 7) chute à une première valeur de résistance (R1) prédéfinie et le courant de soudage par adhérence (Ih) est mis en circuit lorsque la première valeur de résistance (R1) prédéfinie est atteinte.

5. Procédé selon l'une des revendications 1 à 4, **caractérisé en ce que** le courant de soudage par adhérence (Ih) est réglé à sa valeur maximale en utilisant une fonction de rampe.

6. Procédé selon l'une des revendications 1 à 5, **caractérisé en ce qu'**un courant de soudage (Is) destiné au soudage de la tôle sandwich (1) avec l'élément structural (2) est réglé lorsqu'une deuxième valeur de résistance (R2) électrique prédéfinie est atteinte entre la première et la deuxième électrode de soudage (6, 7).

7. Procédé selon l'une des revendications 1 à 6, **caractérisé en ce que** le courant de soudage (Is) est réglé à sa valeur maximale en utilisant une fonction de rampe.

8. Procédé selon l'une des revendications 1 à 7, **caractérisé en ce que** la force de soudage (F) entre la première et la deuxième électrode de soudage (6, 7) est augmentée au moins jusqu'à ce que la résistance électrique (R) entre la première et la deuxième électrode de soudage (6, 7) chute.

9. Procédé selon l'une des revendications 1 à 8, **caractérisé en ce que** la force de soudage (F) est maintenue constante dès que la résistance électrique (R) entre la première et la deuxième électrode de soudage (6, 7) a chuté à une troisième valeur de résistance prédéfinie.

10. Procédé selon l'une des revendications 1 à 9, **caractérisé en ce que** le courant de préchauffage (Iv) est déconnecté après une première durée de préchauffage (t1) fixe.
